# EUROPEAN PATENT APPLICATION

(11) **EP 3 447 988 A1**
(43) Date of publication of application: **27.02.2019**
(21) Application number: 17187785.5
(22) Date of filing: 24.08.2017
(51) Int. Cl.: H04L 29/06

(54) **METHOD FOR AUTHORIZING A DRIVER TO ACTIVATE AT LEAST ONE SYSTEM OF A VEHICLE, BASED ON A BIOMETRIC AUTHENTICATION PROCESS**

(71) Applicant: DURA Operating, LLC, Auburn Hills, MI 48326 (US)
(72) Inventor: FARGES, Thomas, 91940 Gometz Le Chatel (FR)
(74) Representative: Cabinet Laurent & Charras

(57) **Abstract**

The invention concerns a method for authorizing a driver (2) to activate at least one system of a vehicle (5), based on a biometric authentication process. The method comprises an enrollment step (110), a reservation step (120), an access step (130), an authentication step (140), then an activation step or a refusal step. In the access step (130), when device (3) enters a predetermined range from the vehicle (5), device (3) provides the vehicle identifier (50) to vehicle (5), while vehicle (5) provides the device identifier (30) to device (5), thus establishing a wireless communication (63) between device (3) and vehicle (5). Driver (2) is granted access to vehicle (5) upon completion of a secured protocol (70). Device (3) provides the first part (21) of the biometric data (20) to vehicle (5) via the wireless communication (63). In the authentication step (140), vehicle (5) processes the first part (21) and the second part (22) to restore the enrollment biometric data (20). A reader (18) equipping vehicle (5) is used for scanning authentication biometric data (23) of driver (2). The authentication biometric data (23) are then compared with the enrollment biometric data (20) registered in the vehicle (5).

## Description

### TECHNICAL FIELD OF THE INVENTION

The invention concerns a method for authorizing a driver to activate at least one system of a vehicle, based on a biometric authentication process.

### BACKGROUND OF THE INVENTION

US6810309 discloses a method for authorizing a driver to drive a vehicle. This method comprises an enrollment step consisting in entering an administrator code, then using a biometric identification system to register the driver, inside the vehicle. This method further comprise an authentication step, consisting in comparing authentication biometric data newly scanned with enrollment biometric data previously registered.

US20150217726 discloses another method, with an enrollment step consisting in entering an administrator code or scanning biometric data of a master driver, then scanning biometric data of a new driver, inside the vehicle. Again, the authentication step consists in comparing authentication biometric data newly scanned with enrollment biometric data previously registered.

US2010060412 discloses another method, with an enrollment step consisting in scanning biometric data of a new driver directly on an electronic key integrating a scanner. The authentication step consists in inserting the electronic key in a corresponding socket equipping the vehicle, then comparing authentication biometric data newly scanned inside the vehicle with enrollment biometric data previously registered in the electronic key.

WO2015119417 discloses another method, wherein biometric data are stored in a smartphone.

US2006056663 discloses another method, wherein a biometric scanner is located outside the vehicle.

WO2009146315 and WO2005064547 disclose other methods, wherein enrollment biometric data are split into two separate parts.

### SUMMARY OF THE INVENTION

The aim of the invention is to provide an improved method based on a biometric authentication process.

To this end, the invention concerns a method for authorizing a driver to activate at least one system of a vehicle, based on a biometric authentication process, said method comprising:
- an enrollment step consisting in :
   - scanning enrollment biometric data of the driver,
   - splitting the enrollment biometric data into a first part registered in a personal device of the driver and a second part registered in a server distinct from the personal device,
- a reservation step in which:
   - the driver requests a vehicle to the server,
   - a device identifier of the personal device is provided to the server,
   - a vehicle having a vehicle identifier is assigned to the driver,
   - the server provides a first data set including the vehicle identifier of the vehicle to the personal device via a first wireless communication,
   - the server provides a second data set including the device identifier and the second part of the enrollment biometric data to the vehicle via a second wireless communication,
- an access step in which :
   - when the personal device enters a predetermined range from the vehicle, the personal device provides the vehicle identifier to the vehicle, while the vehicle provides the device identifier to the personal device, thus establishing a third wireless communication between the personal device and the vehicle,
   - the driver is granted access to the vehicle upon completion of a secured protocol,
   - the personal device provides the first part of the biometric data to the vehicle via the third wireless communication,
- an authentication step, in which:
   - the vehicle processes the first part and the second part to restore the enrollment biometric data in a secured memory,
   - a reader equipping the vehicle is used for scanning authentication biometric data of the driver,
   - the authentication biometric data are compared with the enrollment biometric data registered in the secured memory of the vehicle, then
- an activation step consisting, if the authentication biometric data match with the enrollment biometric data, in authorizing the driver to activate the at least one system of the vehicle, or
- a refusal step consisting, if the authentication biometric data does not match with the enrollment biometric data, in forbidding the driver to activate the at least one system of the vehicle.

Thanks to the invention, a driver can be authorized to drive a vehicle, based on a triple security procedure. First, splitting the biometric data in two parts ensure that said data is not fully stored in the personal device or in the server, where it could be stolen. The full biometric data is only stored temporarily in the server and in the vehicle. Secondly, a secured protocol is implemented when the driver access the vehicle. Thirdly, the biometric authentication process ensures that the driver taking place in the vehicle is the same that enrolled earlier before the owner. Further security measures can be implemented, as detailed here-after.

According to further aspects of the invention which are advantageous but not compulsory, such a method may incorporate one or several of the following features.

In a first embodiment, in the reservation step, an access code is included in both the first data set and the second data set.

The secured protocol granting access to the vehicle can consist in manually typing the access code on an external keypad equipping the vehicle.

Alternately, the secured protocol granting access to the vehicle can consist in entering the access code in a dedicated application installed on the personal device.

In a second embodiment, in the access step, the secured protocol granting access to the vehicle simply consists in establishing the third wireless communication between the personal device and the vehicle when the personal device enters a predetermined range from the vehicle.

In a third embodiment, the access step and the authentication step are at least partly concomitant, and the secured protocol consists in authenticating the driver when the authentication biometric data match with the enrollment biometric data in the authentication step.

Preferably, the personal device provides the first part of the biometric data to the vehicle after completion of the secured protocol.

Alternately, the personal device provides the first part of the biometric data to the vehicle automatically after establishing the third wireless communication.

Alternately, in the reservation step, a transfer code is included in both the first data set and the second data set. The personal device provides the first part of the biometric data to the vehicle after entering the transfer code in a dedicated application installed on the personal device.

Preferably, the access step precedes the authentication step.

Alternately, the access step and the authentication step can be at least partly concomitant, as in the third embodiment mentioned here-above.

Preferably, the personal device is a smartphone.

Alternately, the personal device can be a smart card.

Alternately, the personal device can be any other electronic device, such as a laptop, a tablet, a watch, etc.

The biometric data can include at least one fingerprint, a palmar venous network, an eye iris, facial features and/or voice.

The reader used in the authentication step can be designed according to various embodiments.

The reader can be integrated to a shifter equipping the vehicle.

Alternately, the reader can be a camera oriented outside the vehicle. Preferably, said camera is integrated to a capping of the vehicle. Also preferably, said capping is made of plastic material.

Alternately, the reader can be a camera designed for driving assistance.

Besides, according to further aspects of the invention, the method may incorporate one or several of the following features.
- The third wireless communication implements a communication standard different from the first wireless communication and the second wireless communication.
- The first wireless communication and the second wireless communication implement mobile communication standard(s), for example 3G, 4G, GSM, EDGE, LTE, etc.
- The third wireless communication implements Bluetooth communication standard.
- The enrollment step consists in: scanning the enrollment biometric data of the driver, said enrollment biometric data being registered in the server; encrypting the enrollment biometric data into a first part and a second part on the server; registering the first part in a personal device of the driver, then erasing the first part from the server.
- The personal device and/or the vehicle sends a message to the server upon establishment of the third wireless communication.
- The personal device and/or the vehicle sends a message to the server upon completion of the secured protocol.
- The personal device and/or the vehicle sends a message to the server upon transfer of the first part of the biometric data from the personal device to the vehicle.
- The enrollment biometric data are erased from the secured memory of the vehicle after the driver relocks the vehicle or after a predefined period of time.
- The server is installed in a fleet management center.
- The server is an independent personal device distinct from the personal device of the driver. For example, said independent personal device can be the personal device of the vehicle owner, lending the vehicle to a family member, a friend or a colleague.
- The secured memory of the vehicle is integrated to a shifter equipping the vehicle.
- The enrollment step is performed at a dedicated location, outside the vehicle, for example in a fleet management center.
- The refusal step further consists in issuing a warning signal inside the vehicle and/or to the server.

### BRIEF DESCRIPTION OF THE DRAWINGS

The invention will now be explained in correspondence with the annexed figures, and as an illustrative example, without restricting the object of the invention. In the annexed figures:
- figure 1 is a chart illustrating a preferred embodiment of the method according to the invention;
- figure 2 is a schematic view illustrating the access step of the method;
- figure 3 is a schematic view illustrating the authentication step of the method;
- figure 4 is a schematic view illustrating the activation step of the method; and
- figure 5 is a schematic view illustrating the refusal step of the method.

### DETAILED DESCRIPTION OF SOME EMBODIMENTS

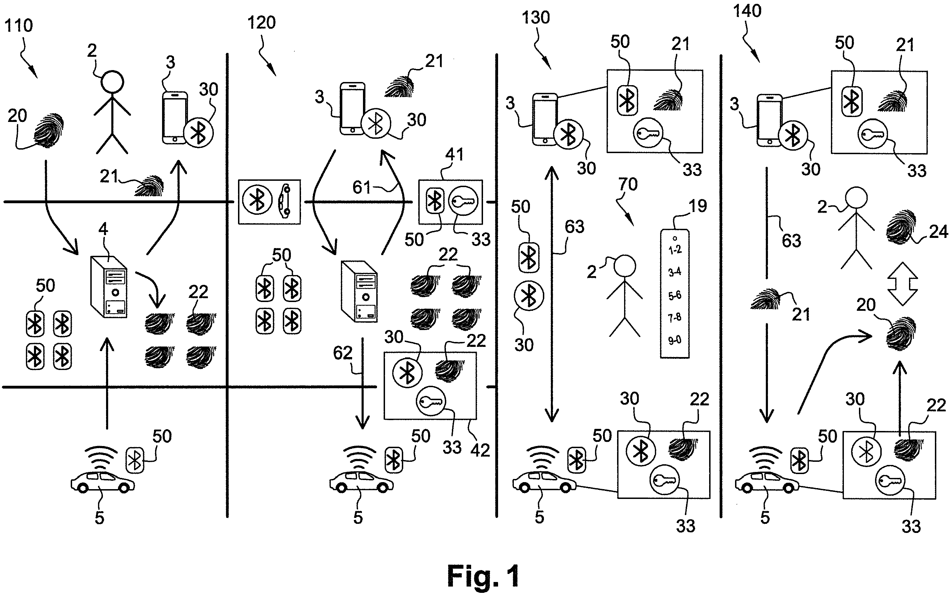

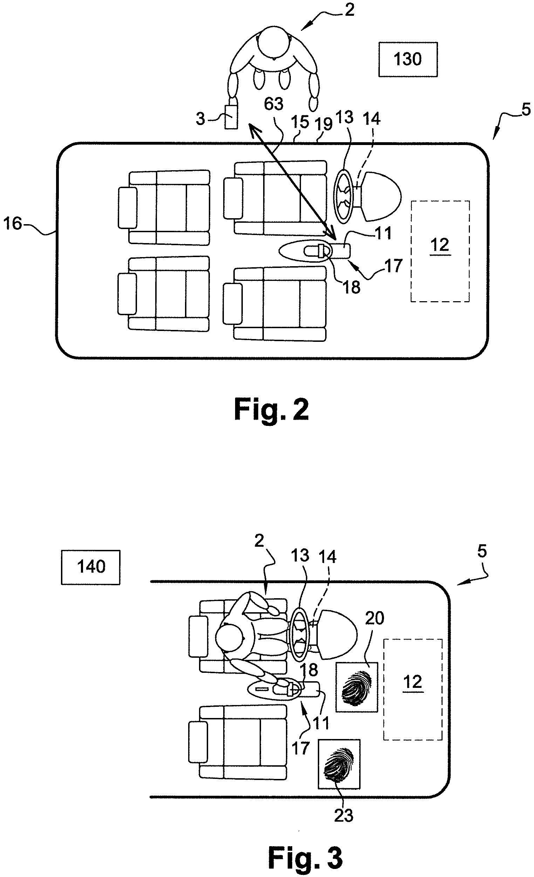

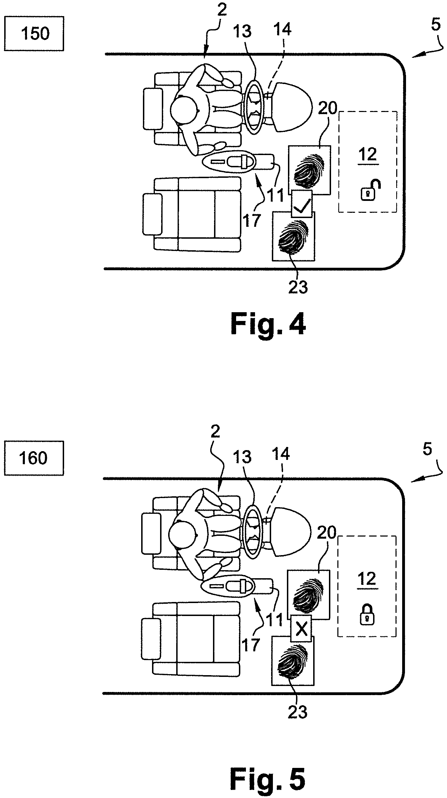

Figures 1 to 5 illustrate a preferred embodiment of the method according to the invention, for authorizing a driver 2 to activate at least one system of a vehicle 5, based on a biometric authentication process.

The method comprises an enrollment step 110, a reservation step 120, an access step 130 and an authentication step 140. The method further comprises an activation step 150 or a refusal step 160, following the authentication step 140, depending on the success or failure of the biometric authentication process.

The enrollment step 110 can be performed at a dedicated location, outside vehicle 5. Preferably, the dedicated location is an enrollment center, used to manage a fleet of vehicles 5. The enrollment center comprises a biometric scanner for scanning the fingerprint of driver 2, and a server 4 storing vehicle identifiers 50 associated with different vehicles 5. Alternately; step 110 can be performed by using a biometric scanner outside enrollment center, inside or outside vehicle 5, then sending data to server 4.

The enrollment step 110 consists in scanning enrollment biometric data 20 of driver 2, then splitting the enrollment biometric data 20 into a first part 21 and a second part 22. Driver 2 owns a personal device 3, such as a smartphone.

In the represented example, data 20 is a fingerprint of driver 2. Alternately, data 20 may be a palmar venous network, an eye iris, facial features, voice, or any other suitable biometric data.

Server 4 processes data 20 to create parts 21 and 22. In the represented example, part 21 corresponds to the upper part of the fingerprint, while part 22 corresponds to the lower part of the fingerprint. Thus, data 20 cannot be reconstituted when parts 21 and 22 are taken alone but can be reconstituted when parts 21 and 22 are reunited. Alternately, parts 21 and 22 can comprise any portions of data 20, preventing to reconstitute data 20 when parts 21 and 22 are taken alone and allowing to reconstitute data 20 when parts 21 and 22 are reunited.

Part 21 is registered in device 3 of the driver 2, such as a smartphone. Part 22 is registered in the server 4. Data 20 and part 21 are then deleted from server 4. Thus, server 4 does not store full data 20 corresponding to the fingerprint.

The reservation step 120 can be performed via a dedicated application installed on device 3, via a dedicated website, or directly at the enrollment center.

Firstly, driver 2 requests one of the vehicles 5 from the fleet to server 4.

Secondly, a device identifier 30 corresponding to device 3 is provided to server 4.

Thirdly, a vehicle 5 having a vehicle identifier 50 is assigned to driver 2. Moreover, an access code 33 is assigned to vehicle 5 and driver 2.

At this stage, server 4 provides a first data set 41 including the vehicle identifier 50 and the access code 33 to device 3 via a wireless communication 61, and provides a second data set 42 including the device identifier 30, the access code 33 and the second part 22 of the enrollment biometric data 20 to vehicle 5 via another wireless communication 62.

Preferably, communications 61 and 62 implement a mobile communication standard(s), for example 3G, 4G, GSM, EDGE, LTE, etc. Alternately, communications 61 and 62 can implement any other wireless communication standard.

Also preferably, data 41, 42 and communications 61, 62 implement encryption techniques.

The access step 130 is performed when driver 2 reaches vehicle 5, in order to allow driver 2 to enter vehicle 5.

Vehicle 5 comprises a secured memory 11 connected to or integrated into its electronic central unit. Vehicle 5 further comprises an engine 12, a steering wheel 13, a steering column 14, several doors 15, a rear trunk 16, a shifter 17, a biometric scanner 18, and an external keypad 19. Preferably, secured memory 11 is integrated to the electronic board disposed inside the base of shifter 17. Also preferably, scanner 18 is disposed at the upper extremity of the knob of shifter 17.

When device 3 enters a predetermined range from vehicle 5, device 3 provides the vehicle identifier 50 to vehicle 5, while vehicle 5 provides the device identifier 30 to device 3. Thus, a wireless communication 63 is established between device 3 and vehicle 5.

Driver 2 is granted access to the vehicle 5 upon completion of a secured protocol 70. On the represented example, the secured protocol 70 consists in manually typing the access code 33 on the external keypad 19 equipping vehicle 5.

Alternately, the secured protocol 70 can consist in entering the access code 33 in the dedicated application installed on device 3.

Preferably, communication 63 is established automatically, independently of completion of protocol 70, when device 3 provides the vehicle identifier 50 to vehicle 5, while vehicle 5 provides the device identifier 30 to device 3.

Alternately, communication 63 can be established only after completion of the secured protocol 70.

Preferably, the third wireless communication implements Bluetooth communication standard. Also preferably, communication 63 implements a communication standard different from communications 61 and 62. Also preferably, communication 632 implements encryption techniques.

During the access step 130, device 3 provides part 21 of biometric data 20 to vehicle 5 via communication 63.

Preferably, device 3 provides part 21 of data 20 to vehicle 5 after completion of the secured protocol 70 granting access to vehicle 5. In this regard, vehicle 5 can confirm to device 3 that protocol 70 has been complete, so that device 3 will provide part 21 of data 20.

Alternately, device 3 can provide part 21 of data 20 to vehicle 5 automatically after establishing communication 63, independently of completion of the secured protocol 70 granting access to vehicle 5.

Alternately, in the reservation step 120, a transfer code different from the access code 33 can be included in both the first data set 41 and the second data set 42. Device 3 provides the first part 21 of data 20 to vehicle 5 after entering the transfer code in the dedicated application installed on device 3, independently of completion of the secured protocol 70 granting access to vehicle 5.

In the authentication step 140, vehicle 5 processes part 21 provided by device 3 and part 22 previously provided by server 4 to restore the enrollment biometric data 20 in the secured memory 11.

Driver 2 uses reader 18 is used for scanning authentication biometric data 23.

Then, the authentication biometric data 23 are compared with the enrollment biometric data 20 registered in memory 11 of vehicle 5. Preferably, data 23 are used for comparison but not registered in memory 11. Alternatively, data 23 may be temporarily registered in memory 11.

The activation step 150 consists, if data 23 match with data 20, in authorizing driver 2 to activate systems 12 and 14 of vehicle 5. In other words, driver 2 can ignite engine 12 and rotate steering column 14, so as to drive vehicle 5.

The refusal step 160 consists, if data 23 does not match with data 20, in forbidding driver 2 to activate systems 12 and 14 of vehicle 5. In other words, driver 2 cannot ignite engine 12, nor rotate steering column 14. In addition, vehicle 5 may be configured such that its handbrake is locked when data 23 does not match data 20. As an alternative or a complement, vehicle 5 may be configured for issuing a warning signal, especially a visual signal and/or a sound signal, inside vehicle 5 and/or to the server 4. Other results may be implemented within the scope of the invention.

Preferably, data 20, 21, 22 and 23 are erased from secured memory 11 of vehicle 5 when driver 2 relocks vehicle 5 (more precisely when driver 2 relocks openings 15 and 16 when leaving vehicle 5) or after a predefined period of time (starting at relocking of openings 15 and 16, or another predefined event).

Such method is advantageously secured, given that sensitive personal biometric data 20, 21, 22 and 23 do not stay stored in vehicle 5. Thus, these data cannot be recovered and used by someone having access to vehicle 5.

In addition, only data 20, 21, 22 and 23 corresponding to current driver 2 are stored in memory 11 at a given time. This speeds up comparison between data 20 and 23, and activation of system 12 and/or 14 of vehicle 5.

As shown on figures 1 to 5, the enrollment step 110 precedes the reservation step 120, which precedes the access step 130. The access step 130 usually precedes the authentication step 140. The authentication step 140 precedes the activation step 150 or the refusal step 160.

Alternately, the access step 130 and the authentication step 140 can be partly concomitant.

For example, the secured protocol 70 granting access to vehicle 5 in the access step 130 can consist in authenticating the driver 2 when the authentication biometric data 23 match with the enrollment biometric data 20 in the authentication step 140.

In this case, the sub-steps of steps 130 and 140 are performed according to the following sequence:
- When device 3 enters a predetermined range from vehicle 5, device 3 provides the vehicle identifier 50 to vehicle 5, while vehicle 5 provides the device identifier 30 to device 3, thus establishing communication 63 between device 3 and vehicle 5.
- Device 3 provides part 21 of data 20 to vehicle 5 via communication 63.
- Vehicle 5 processes parts 21 and 22 to restore data 20 in memory.
- Reader 18 is used for scanning the authentication biometric data 23 of driver 2.
- Data 23 are compared with data 20.
- If data 23 match with data 20, driver 2 is granted access to vehicle 5. In addition, driver 2 is authorized to activate systems 12 and 14 of vehicle 5.

Other non-shown embodiments can be implemented within the scope of the invention.

In addition, technical features of the different embodiments can be, in whole or part, combined with each other. Thus, the method can be adapted to the specific requirements of the application.

## Claims

1. A method for authorizing a driver (2) to activate at least one system (12, 14) of a vehicle (5), based on a biometric authentication process,
said method comprising:
- an enrollment step (110) consisting in :
- scanning enrollment biometric data (20) of the driver (2),
- splitting the enrollment biometric data (20) into a first part (21) registered in a personal device (3) of the driver (2) and a second part (22) registered in a server (4) distinct from the personal device (3),
- a reservation step (120) in which:
- the driver (2) requests a vehicle (5) to the server (4),
- a device identifier (30) of the personal device (3) is provided to the server (4),
- a vehicle (5) having a vehicle identifier (50) is assigned to the driver (2),
- the server (4) provides a first data set (41) including the vehicle identifier (50) of the vehicle (5) to the personal device (3) via a first wireless communication (61),
- the server (4) provides a second data set (42) including the device identifier (30) and the second part (22) of the enrollment biometric data (20) to the vehicle (5) via a second wireless communication (62),
- an access step (130) in which :
- when the personal device (3) enters a predetermined range from the vehicle (5), the personal device (3) provides the vehicle identifier (50) to the vehicle (5), while the vehicle (5) provides the device identifier (30) to the personal device (3), thus establishing a third wireless communication (63) between the personal device (3) and the vehicle (5),
- the driver (2) is granted access to the vehicle (5) upon completion of a secured protocol (70),
- the personal device (3) provides the first part (21) of the biometric data (20) to the vehicle (5), via the third wireless communication (63),
- an authentication step (140), in which:
- the vehicle (5) processes the first part (21) and the second part (22) to restore the enrollment biometric data (20) in a secured memory (11),
- a reader (18) equipping the vehicle (5) is used for scanning authentication biometric data (23) of the driver (2),
- the authentication biometric data (23) are compared with the enrollment biometric data (20) registered in the secured memory (11) of the vehicle (5), then
- an activation step (150) consisting, if the authentication biometric data (23) match with the enrollment biometric data (20), in authorizing the driver (2) to activate the at least one system (12, 14) of the vehicle (5), or
- a refusal step (160) consisting, if the authentication biometric data (23) does not match with the enrollment biometric data (20), in forbidding the driver (2) to activate the at least one system (12, 14) of the vehicle (5).

2. The method according to claim 1, wherein in the reservation step (120), an access code (33) is included in both the first data set (41) and the second data set (42).

3. The method according to claim 2, wherein in the access step (130), the secured protocol (70) granting access to the vehicle (5) consists in manually typing the access code (33) on an external keypad (19) equipping the vehicle (5).

4. The method according to claim 2, wherein in the access step (130), the secured protocol (70) granting access to the vehicle (5) consists in entering the access code (33) in a dedicated application installed on the personal device (3).

5. The method according to claim 1, wherein in the access step (130), the secured protocol (70) granting access to the vehicle (5) simply consists in establishing the third wireless communication (63) between the personal device (3) and the vehicle (5) when the personal device (3) enters a predetermined range from the vehicle (5).

6. The method according to claim 1, wherein the access step (130) and the authentication step (140) are at least partly concomitant, and wherein the secured protocol (70) granting access to the vehicle (5) in the access step (130) consists in authenticating the driver (2) when the authentication biometric data (23) match with the enrollment biometric data (20) in the authentication step (140).

7. The method according to any one of the previous claims 1 to 6, wherein the personal device (3) provides the first part (21) of the biometric data (20) to the vehicle (5) after completion of the secured protocol (70).

8. The method according to any one of the previous claims 1 to 6, wherein the personal device (3) provides the first part (21) of the biometric data (20) to the vehicle (5) automatically after establishing the third wireless communication (63).

9. The method according to any one of the previous claims 1 to 6, wherein in the reservation step (120), a transfer code (34) is included in both the first data set (41) and the second data set (42), and wherein the personal device (3) provides the first part (21) of the biometric data (20) to the vehicle (5) after entering the transfer code (34) in a dedicated application installed on the personal device (3).

10. The method according to any one of the previous claims 1 to 9, wherein the third wireless communication (63) implements a communication standard different from the first wireless communication (61) and the second wireless communication (62).

11. The method according to any one of the previous claims 1 to 10, wherein the enrollment biometric data (20) are erased from the secured memory (11) of the vehicle (5) after the driver (2) relocks the vehicle (5) or after a predefined period of time.

12. The method according to any one of the previous claims 1 to 11, wherein the biometric data (20, 23) include at least one fingerprint, a palmar venous network, an eye iris, facial features and/or voice.

13. The method according to any one of the previous claims 1 to 12, wherein the server (4) is an independent personal device distinct from the personal device (3) of the driver (2).

14. The method according to any one of the previous claims 1 to 13, wherein the reader (18) used in the authentication step (140) is integrated to a shifter (17) equipping the vehicle (5).

15. The method according to any one of the previous claims 1 to 13, wherein the reader (18) used in the authentication step (140) is a camera oriented outside the vehicle (5).

16. The method according to any one of the previous claims 1 to 13, wherein the reader (18) used in the authentication step (140) is a camera designed for driving assistance.
